# EUROPÄISCHE PATENTSCHRIFT

(11) **EP 3 446 892 B1**
(45) Veröffentlichungstag und Bekanntmachung des Hinweises auf die Patenterteilung: **29.04.2020**
(21) Anmeldenummer: 18172214.1
(22) Anmeldetag: 15.05.2018
(51) Int. Cl.: B60C 11/12

(54) **FAHRZEUGLUFTREIFEN**
PNEUMATIC TYRES FOR A VEHICLE
PNEUMATIQUE DE VÉHICULE

(30) Priorität: 25.08.2017 DE 102017214877
(43) Veröffentlichungstag der Anmeldung: 27.02.2019
(73) Patentinhaber: Continental Reifen Deutschland GmbH, 30165 Hannover (DE)
(72) Erfinder: Schlittenhard, Jan, 30900 Wedemark (DE); Bauer, Claudia, 31542 Bad Nenndorf (DE); Vennebörger, Martin, 30625 Hannover (DE)
(74) Vertreter: Finger, Karsten

(56) Entgegenhaltungen:
- EP-A1- 2 234 821
- EP-A1- 2 660 080
- US-A1- 2008 029 193

## Beschreibung

Die Erfindung betrifft einen Fahrzeugluftreifen für Personenkraftwagen, insbesondere für den Einsatz unter winterlichen Fahrbedingungen, mit einem Laufstreifenprofil mit zumindest einer in Umfangsrichtung umlaufenden Blockreihe, deren Profilblöcke durch Querrillen voneinander getrennt sind und deren Profilblöcke in Draufsicht mit zumindest zwei im Wesentlichen parallel zueinander und miteinander fluchtenden wellen- oder zick-zack-förmigen Feineinschnitten versehen sind, welche um eine gedachte Null-Linie mit Auslenkung nach oben Wellenberge und mit Auslenkung nach unten Wellentäler ausbilden und wobei die Feineinschnitte weiterhin in Draufsicht eine erste Breite von 0,3 bis 0,6 mm aufweisen, welche über einen Großteil der Längserstreckung des Feineinschnittes ausgebildet ist und Abschnitte einer zweiten, größeren Breite aufweisen, welche lokal als Schneetaschen in den Bereichen der größten Auslenkung ausgebildet sind.

Fahrzeugluftreifen mit derart ausgeführten Laufstreifenprofilen sind in unterschiedlichen Ausführungsvarianten bekannt. Solche Laufstreifenprofile können laufrichtungsgebunden, nicht laufrichtungsgebunden und/oder als asymmetrische Profile ausgeführt sein. Die Feineinschnitte in den Profilblöcken eines Laufstreifens sind für einen guten Wintergriff, insbesondere auf Schnee und Eis, unerlässlich.

Es gibt eine Vielzahl an bekannten Ausbildungen von Feineinschnitten. Am bekanntesten ist eine Ausbildung, bei der der Feineinschnitt in Profilaufsicht sinusförmig oder zick-zack-förmig ausgebildet ist und in seinem Tiefenverlauf innerhalb des Profilblockes unverändert ist (2-dimensionaler Feineinschnitt). Es sind aber auch verschiedenste Feineinschnitte bekannt, deren Ausbildung sich mit dem Tiefenverlauf innerhalb des Profilblockes ändert, z.B. eine veränderliche Amplitude (Auslenkung) aufweisen (3-dimensionaler Feineinschnitt).

"Zick-zack-förmiger Feineinschnitt" meint einen um eine Nulllinie ausgelenkten Feineinschnitt, dessen undulierenden Verlauf Ecken aufweist.

Ein Feineinschnitt kann den Profilblock vollständig queren oder innerhalb des Profilblockes enden. Die Wellen- oder Zick-Zack-Ausbildung von undulierenden Feineinschnitten ist meist nur im mittigen Bereich des Feineinschnittes ausgebildet, während die beiden Enden des Feineinschnittes beispielsweise als Gerade ausgebildet sind und häufig in einem stumpfen Winkel auf die Blockkante treffen.

Insbesondere wellen- oder zick-zack-förmige Einschnitte sind vor allem dazu gut geeignet, die Griffeigenschaften des Laufstreifens auf winterlichen Fahrbahnen, wie auf Schnee, Schneematsch oder Eis, zu verbessern und haben durch ihre Form infolge von gegenseitigen Abstützungseffekten der Feineinschnittwände eine versteifende, stabilisierende Wirkung auf die Profilblöcke. Die Schneetaschen der Feineinschnitte hingegen, also die Abschnitte größerer Breite, dienen bei winterlichen Bedingungen vornehmlich dazu, Schnee aufzunehmen, um die Schnee/Schnee - Reibung zu erhöhen und derart eine bessere Haftung des Reifens auf winterlicher Fahrbahn zu ermöglichen. Durch die Schneetaschen, deren Wände sich aufgrund der größeren Breite der Schneetaschen, nicht oder nur unzureichend gegeneinander abstützen können, findet eine Erweichung des Profilblockes statt.

Ein Fahrzeugluftreifen eingangs genannter Art ist beispielsweise aus der EP 2 234 821 A1 bekannt. Der Laufstreifen dieses Fahrzeugluftreifens weist Profilblöcke mit wellenförmig oder zickzackförmig verlaufenden Feineinschnitten auf, welche Abschnitte mit zwei unterschiedlichen Breiten aufweisen, wobei die Abschnitte mit der größeren Breite lokal um die Stellen mit der größten Auslenkung ausgebildet sind. Die breiten Abschnitte weisen eine Tiefe auf, die mindestens 30 % der Tiefe der schmalen Abschnitte beträgt, ihre Tiefe ist jedoch geringer als die Tiefe der schmalen Abschnitte. Aus der EP 2 660 080 A1 ist ein Fahrzeugreifen mit einem Laufstreifenprofil mit Profilblöcken bekannt, in welchen Feineinschnitte, welche in Draufsicht eine etwa omegaförmige Geometrie aufweisen, verlaufen. Diese Feineinschnitte weisen, in Draufsicht betrachtet, wenigstens einen Abschnitt auf, dessen Breite größer ist als die Breite in den sonstigen Abschnitten der Feineinschnitte. Ein weiterer Fahrzeugreifen mit einem Laufstreifen mit Profilblöcken mit zickzackförmigen Einschnitten mit Abschnitten unterschiedlicher Breiten ist aus der US 2008/029193 A1 bekannt.

Aus der DE 10 2007 060 559 A1 ist beispielsweise ein Fahrzeugluftreifen gemäß dem Oberbegriff bekannt. Das Laufstreifenprofil des vorgenannten Fahrzeugluftreifens weist durch Querrillen getrennte Profilblöcke auf, welche mit mehreren wellen- oder zick-zack-förmigen Feineinschnitten versehen ist. Dabei weist jeder Feineinschnitt um jede Stelle maximaler Amplitude breitere Abschnitte auf. Hierdurch weist jeder Feineinschnitt sowohl in jedem Wellenberg als auch in jedem Wellental die breiteren, als Schneetaschen wirkenden Abschnitte auf.

Als Folge ist die Steifigkeit im Profilblock sehr unterschiedlich, insbesondere kann der mittige Bereich des Profilblockes erweicht sein, wodurch für die Kraftübertragung nicht die gesamte Profilblockfläche sondern nur der steifere Teilbereich des Profilblockes herangezogen werden kann. Die Kraftübertragung ist nicht optimal.

Der Erfindung liegt die Aufgabe zugrunde, bei einem Fahrzeugreifen der eingangs genannten Art durch eine konstruktiv einfache Maßnahme die Steifigkeit der Profilblöcke über dessen Profilblockoberfläche zu vergleichmäßigen und eine übermäßige Erweichung zu verhindern.

Gelöst wird die gestellte Aufgabe erfindungsgemäß dadurch, dass die Schneetaschen derart über den Profilblock verteilt angeordnet sind, dass ein erster Feineinschnitt die Schneetaschen ausschließlich in den Wellenbergen und der zweite oder die weiteren diesem Feineinschnitt unmittelbar benachbart(en) Feineinschnitt(e) die Schneetaschen ausschließlich in den Wellentälern aufweist(en) oder vice verca.

Es ist somit ein Profilblock mit zwei oder mehr Feineinschnitten geschaffen, bei dem die den Profilblock aufweichenden Schneetaschen derart über die Fläche des Profilblockes verteilt angeordnet sind, dass eine Vergleichmäßigung der Steifigkeit der Profilblockoberfläche erhalten ist. Ein Feineinschnitt weist ausschließlich in den Wellenbergen im Bereich der größten positiven Auslenkung (Amplitude) die Schneetaschen auf und dieses in jedem Wellenberg dieses Feineinschnittes, während der unmittelbar (darüber und/oder darunter) benachbarte Feineinschnitt ausschließlich im Wellental im Bereich der größten negativen Auslenkung (Amplitude) die Schneetaschen und dieses in jedem Wellental dieses Feineinschnittes aufweist.
Betrachtet man alle Feineinschnitte eines Profilblockes beispielsweise in der Flucht eines bestimmten Wellenberges und der Profilblock weist beispielsweise drei Feineinschnitte auf, ist die Abfolge wie folgt:
Feineinschnitt 1: Schneetasche, Feineinschnitt 2: keine Schneetasche, Feineinschnitt 3: Schneetasche oder vice verca.
Durch diese Einteilung ist eine Vergleichmäßigung der Steifigkeit bzw. eine gleichmäßige Erweichung des Profilblockes erreicht, welche sich positiv auf die Kraftübertragung dieses Profilblockes auswirkt.

Vorteilhaft ist es, wenn die wellenförmigen oder zick-zack-förmigen Feineinschnitte trapezförmige Auslenkungen aufweisen, wobei die lange (gedachte) Grundseite auf der (gedachten) Null-Linie des Feineinschnittes angeordnet ist und die kürzere Grundseite die maximale Auslenkung ist und die Schneetasche aufweist und wobei die Schneetasche vorzugsweise über die gesamte Länge dieser kürzeren Grundseite ausgebildet ist. Die trapezförmige Auslenkung, bei der die maximale Auslenkung durch eine Gerade gebildet ist, ist die Ausbildung einer vergleichsweise langen Schneetasche ermöglicht, wodurch die Schnee-Schnee-Reibung verbessert ist.

In einer bestimmten Ausführungsform der Erfindung ist wenigstens eine Schneetasche eines Feineinschnittes einseitig oder beidseitig in ihrer Längserstreckung derart etwa parallel zur Null-Linie verlängert, dass diese über die maximale Auslenkung hinausreicht. Durch die große Schneetasche ist die Schnee-Schnee-Reibung verbessert.

Die Grundseiten des undulierenden Feineinschnittes, welche im Bereich der größten Auslenkung ausgebildet sind, können gleichlang oder verschiedenlang sein. Vorzugsweise weisen sie etwa die gleiche Länge auf und zwar in einem Bereich von 2 - 10 mm, vorzugsweise von 2 - 6 mm. Die Schenkel des Trapezes schließen mit der kürzeren Grundseite einen vorzugsweise gleichen Winkel in einem Bereich von 110° - 160° ein.

Zweckmäßig ist es, wenn die Schneetaschen in Bezug auf ihre Breite mittig auf die Stellen größter Amplitude aufgesetzt sind. Hierdurch ist eine symmetrische Schneetasche ausgebildet. Mit Feineinschnitten die symmetrische Schneetaschen aufweisen, lässt sich in besonders einfacher Weise eine Aufteilung eines Profilblocks mit einer vergleichmäßigten Steifigkeit erreichen.

Vorteilhaft ist es, wenn zwei oder drei Feineinschnitte in einem Profilblock angeordnet sind. Eine gleichmäßig über den Block verteilte Anordnung der Schneetaschen lässt sich besonders einfach erreichen, wenn mehrere Feineinschnitte mit Schneetaschen im Block verteilt sind.

Zweckmäßig ist es, wenn wenigstens ein Feineinschnitt des Profilblockes im Rillengrund den Verlauf einer Geraden aufweist, wobei die wellen- oder zick-zack-förmige Geometrie des Feineinschnittes über einen Großteil der Tiefenerstreckung des Feineinschnittes etwa gleich ist, jedoch in einem Bereich, welcher in einem Tiefenbereich von 1 mm bis 4 mm, vorzugsweise von etwa 2 mm, gemessen vom Rillengrund aus in radialer Richtung, liegt, in eine Gerade übergeht. Hierdurch ist der Rillengrund als auch der tiefste Erstreckungsbereich des Feineinschnittes als Gerade ausgebildet, was vorteilhaft in Bezug auf Vermeidung von Spannungsrissen und somit vorteilhaft für die Haltbarkeit des Fahrzeugluftreifens ist. Der Übergang von Wellen- oder Zick-Zack-Form in eine Gerade erfolgt in einem Übergangsbereich, welcher vor dem vorgenannten Tiefenbereich liegt und in dem die Amplituden in Richtung Rillengrund kleiner werden und in die Form einer Geraden vor dem Rillengrund übergehen.

Zweckmäßig ist es, wenn die Blockreihe eine Schulterblockreihe ist. Eine derartige Gestaltung der Feineinschnitte ist für Schulterblockreihen sinnvoll, denn es treten bei ihnen besonders extrem hohe Belastungen auf, wenn der Reifen im Hochlast- bzw. Minderluftdruckbereich betrieben wird.

Vorteilhaft ist es, wenn die Breite der Schneetaschen um 30% bis 150% breiter als die erste Breite des Feineinschnittes ist. In Abhängigkeit der ersten Breite soll die Breite der Schneetaschen (zweite Breite) so gewählt werden, dass sie über eine ausreichende Breite verfügt, um als Schneetasche wirken zu können, anderseits soll die Schneetasche nur so breit ausfallen, dass das zwischen den Feineinschnitten befindliche Blockelement noch eine ausreichend Breite und Stabilität für die Kraftübertragung aufweist.

Zweckmäßig ist es, wenn die Schneetaschen eine im Wesentlichen konstante Breite aufweisen. Eine solche Ausführung hat den technischen Vorteil, dass sich die Schneetaschen im Schneeeingriff gleichmäßig füllen und somit eine einheitliche Kraftübertragung gewährleistet wird. Zudem lassen diese sich einfach herstellen.

Vorteilhaft ist es, wenn die Breite der Schneetaschen in einem Bereich von 0,7 bis 1,5 mm liegt, bevorzugt etwa 0,9 mm beträgt. Im Bereich dieser Breite liegt der optimale Wirkbereich. Sind die Schneetaschen schmäler, bewirken sie keinen ausreichenden Schneetascheneffekt, sind die Schneetaschen breiter, erweichen diese den Block zu stark und eine gleichmäßige, einheitliche Blocksteifigkeit kann nicht mehr sichergestellt werden.

Zweckmäßig ist es, wenn die erste Breite etwa 0,5 mm beträgt. Die Feineinschnitte besitzen bei dieser Breite sehr gute Griffeigenschaften und gewährleisten eine hervorragende Abstützung der Profilelemente. Zudem weisen die die Feineinschnitte produzierenden Lamellenbleche in den Reifenformen eine ausreichende Standfestigkeit auf. Werden diese Bleche in den Formen zu dünn, können sie bei den wechselnden Belastungen während des Einformens des Reifenrohlings und während des Ausformens des vulkanisierten Reifens verbiegen, abbrechen oder andersartig beschädigt werden. Außerdem ermöglichen sehr dünne Feineinschnitte im Reifen nur eine schlechte Verzahnung mit der winterlich glatten Straßenoberfläche, so nur geringe Brems-, Traktions- oder Seitenführungskräfte übertragen werden könnten.

Vorteilhaft ist es, wenn der Feineinschnitt, welcher der Auslaufkante des Profilblockes am nächsten angeordnet ist, die Schneetaschen im Wellental, also in der der Auslaufkante abgewandten Auslenkung aufweist. Hierdurch sind die Schneetaschen in der der Auslaufkante abgewandten Auslenkung des Feineinschnittes angeordnet, wodurch eine steifere Auslaufkante des Profilblockes erhalten. Diese verbessert die Bremsperformance.

Weitere Merkmale, Vorteile und Einzelheiten der Erfindung werden nun anhand der schematischen Zeichnungen, welche Ausführungsbeispiele darstellen, näher beschrieben.

Dabei zeigen die
Fig. 1 eine Draufsicht auf einen Profilblock eines Laufstreifens eines erfindungsgemäßen Fahrzeugluftreifens und
Fig. 2 eine Draufsicht auf einen anderen Profilblock eines Laufstreifsteifens eines erfindungsgemäßen Fahrzeugluftreifens.

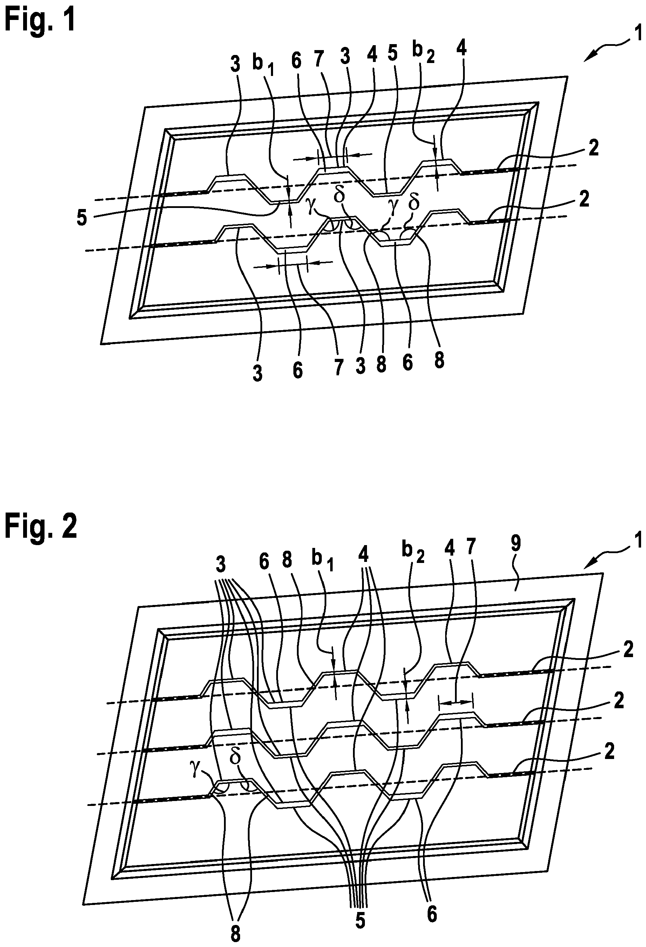

Die Erfindung befasst sich mit einer besonderen Ausführung von Feineinschnitten in Profilblöcken in zumindest einer Blockreihe eines Laufstreifens eines Fahrzeugluftreifens in Radialbauart, insbesondere eines Winterreifens für Personenkraftwagen. Die Fig. 1 zeigt eine Draufsicht auf einen Profilblock 1 eines Laufstreifens eines erfindungsgemäßen Fahrzeugluftreifens. Dieser Profilblock gehört zu einer Schulterblockreihe und weist zwei im Wesentlichen parallel zueinander und miteinander fluchtende zick-zack-förmigen Feineinschnitte 2 auf. Die Feineinschnitte 2 haben eine trapezoide Form, deren lange Grundseite auf einer gedachten Null-Linie (gestrichelte Linie) liegt und deren kürzere Grundseite 3 mit Auslenkung nach oben Wellenberge 4 und mit Auslenkung nach unten Wellentäler 5 ausbildet. Beide Grundseiten 3 haben die Form einer Geraden. Beide Feineinschnitte 2 weisen in ihrem Verlauf entlang ihrer Längserstreckung Bereiche mit unterschiedlichen Breiten auf: eine erste Breite b₁ von 0,3 bis 0,6 mm, welche über einen Großteil der Längserstreckung des Feineinschnittes ausgebildet ist und Abschnitte einer zweiten, größeren Breite b₂, welche als Schneetaschen 6 lokal um die Stellen der größten Auslenkung ausgebildet sind. Erfindungswesentlich ist, dass die Schneetaschen 6 derart über den Profilblock 1 verteilt angeordnet sind, dass der eine Feineinschnitt 2 die Schneetaschen 6 ausschließlich in seinen Wellenbergen 4 und der zweite Feineinschnitt 2 die Schneetaschen 6 ausschließlich in den Wellentälern 5 aufweist. Hierdurch sind die Schneetaschen 6, welche den Profilblock 1 aufweichen, gleichmäßig über die Oberfläche des Profilblockes 1 verteilt. Hierdurch ist die Steifigkeit des Profilblockes 1 vergleichmäßigt. Die Schneetaschen 6 sind über die gesamte Länge 7 der kürzeren Grundseite ausgebildet. Zudem sind die Schneetaschen 6 in Bezug auf ihre Breite b₂ mittig auf die kürzere Grundseite 3 aufgesetzt. Die trapezoide Auslenkung ist symmetrisch. Die Ausbildung der Feineinschnitte 2 ändert sich über den Großteil der Tiefenerstreckung nicht. Jedoch geht die undulierende Ausbildung in die Form einer Geraden über, welche in einem Tiefenbereich von 1 mm bis 4 mm, vorzugsweise von etwa 2 mm, gemessen vom Rillengrund aus, erreicht ist. Die Breite b₂ der Schneetaschen 6 ist über ihre Länge 7 im Wesentlichen konstant und um 30% bis 150% breiter als die erste Breite, also die Breite b₁ der Feineinschnitte und beträgt 0,7 bis 1,5 mm, vorzugsweise 0,9 mm.

Alle kürzeren Grundseiten 3, welche die größten Auslenkungen bilden, sind jeweils gleichlang und weisen eine Länge 7 in einem Bereich von 2 - 6 mm auf. Die Schenkel 8 des Trapezes schließen mit der kürzeren Grundseite 3 gleiche Winkel y, δ in einem Bereich von 110° - 160° ein.

Die Fig. 2 zeigt eine Draufsicht auf einen anderen Profilblock 1 eines Laufstreifsteifens eines erfindungsgemäßen Fahrzeugluftreifens. Der Profilblock 1 der Fig. 2 unterscheidet sich darin von dem der Fig. 1, dass drei Feineinschnitte 2 in dem Profilblock 1 angeordnet sind. Der der Auslaufkante 9 am nächsten angeordnete Feineinschnitt 2 weist die Schneetaschen 6 in den Wellentälern 5 auf, um eine für eine gute Bremsperformance steife Auslaufkante auszubilden.

### Bezugsziffernliste

- 1 ......................: Profilblock
- 2 ......................: Feineinschnitt
- 3 ......................: kürzere Grundseite
- 4 ......................: Wellenberg
- 5 ......................: Wellental
- 6 ......................: Schneetasche
- 7 ......................: Länge der Schneetasche (Länge der kürzeren Grundseite)
- 8 ......................: Schenkel
- 9 ......................: Auslaufkante
- b₁ .....................: erste Breite
- b₂ .....................: zweite, größere Breite
- γ.......................: Winkel
- δ ......................: Winkel

## Patentansprüche

1. Fahrzeugluftreifen für Personenkraftwagen, insbesondere für den Einsatz unter winterlichen Fahrbedingungen, mit einem Laufstreifenprofil mit zumindest einer in Umfangsrichtung umlaufenden Blockreihe, deren Profilblöcke (1) durch Querrillen voneinander getrennt sind und deren Profilblöcke (1) in Draufsicht mit zumindest zwei im Wesentlichen parallel zueinander und miteinander fluchtenden wellenförmigen oder zick-zack-förmigen Feineinschnitten (2) versehen sind, welche um eine gedachte Null-Linie mit Auslenkung nach oben Wellenberge (4) und mit Auslenkung nach unten Wellentäler (5) ausbilden und wobei die Feineinschnitte (2) weiterhin in Draufsicht zwei unterschiedliche Breiten (b₁, b₂) aufweisen, eine erste Breite (b1) von 0,3 bis 0,6 mm, welche über einen Großteil der Längserstreckung des Feineinschnittes (2) ausgebildet ist und Abschnitte einer zweiten, größeren Breite (b₂), welche als Schneetaschen (6) lokal um die Stellen der größten Auslenkung ausgebildet sind,
**dadurch gekennzeichnet,**
**dass** die Schneetaschen (6) derart über den Profilblock (1) verteilt angeordnet sind, dass ein Feineinschnitt (2) Schneetaschen (6) ausschließlich in den Wellenbergen (4) und der oder die diesem Feineinschnitt (2) unmittelbar benachbart(en) Feineinschnitt(e) (2) die Schneetaschen (6) ausschließlich in den Wellentälern (5) aufweist(en) oder vice verca.

2. Fahrzeugluftreifen nach Anspruch 1, **dadurch gekennzeichnet, dass** die wellenförmigen oder zick-zack-förmigen Feineinschnitte (2) eine trapezförmige Auslenkung aufweisen, wobei die eine Grundseite auf der Nulllinie angeordnet ist und die andere Grundseite (3) die Schneetasche (6) aufweist und wobei die Schneetasche (6) vorzugsweise über die gesamte Länge (7) der anderen Grundseite ausgebildet ist.

3. Fahrzeugluftreifen nach Anspruch 1 oder 2, **dadurch gekennzeichnet, dass** die Schneetaschen (6) in Bezug auf ihre Breite (b₂) mittig auf die Stellen größter Auslenkung (4, 5) aufgesetzt sind.

4. Fahrzeugluftreifen nach einem oder mehreren der vorangehenden Ansprüche,
**dadurch gekennzeichnet, dass** zwei oder drei Feineinschnitte (2) in einem Profilblock angeordnet sind und jeder Feineinschnitt (2) die Schneetaschen (6) aufweist.

5. Fahrzeugluftreifen nach einem oder mehreren der vorangehenden Ansprüche,
**dadurch gekennzeichnet, dass** wenigstens ein Feineinschnitt (2) des Profilblockes (1) im Rillengrund den Verlauf einer Geraden aufweist, wobei die wellen- oder zick-zack-förmige Geometrie des Feineinschnittes über einen Großteil seiner Tiefenerstreckung etwa gleich ist, jedoch in einem Bereich, welcher in einem Tiefenbereich von 1 mm bis 4 mm, vorzugsweise von etwa 2 mm, gemessen vom Rillengrund aus, in eine Gerade übergeht.

6. Fahrzeugluftreifen nach einem oder mehreren der vorangehenden Ansprüche,
**dadurch gekennzeichnet, dass** die Blockreihe eine Schulterblockreihe ist.

7. Fahrzeugluftreifen nach einem oder mehreren der vorangehenden Ansprüche,
**dadurch gekennzeichnet, dass** die Breite (b₂) der Schneetaschen um 30% bis 150% breiter als die erste Breite (b₁) ist.

8. Fahrzeugluftreifen nach einem oder mehreren der vorangehenden Ansprüche,
**dadurch gekennzeichnet, dass** die Schneetaschen (6) eine im Wesentlichen konstante Breite (b₂) aufweisen.

9. Fahrzeugluftreifen nach einem oder mehreren der vorangehenden Ansprüche,
**dadurch gekennzeichnet, dass** die Breite (b₂) der Schneetaschen (6) in einem Bereich von 0,7 bis 1,5 mm liegt, bevorzugt etwa 0,9 mm beträgt.

10. Fahrzeugluftreifen nach einem oder mehreren der vorangehenden Ansprüche,
**dadurch gekennzeichnet, dass** die erste Breite (b₁) etwa 0,5 mm beträgt.

11. Fahrzeugluftreifen nach einem oder mehreren der vorangehenden Ansprüche,
**dadurch gekennzeichnet, dass** der Feineinschnitt (2), welcher der Auslaufkante (9) des Profilblockes (1) am nächsten angeordnet ist, die Schneetaschen (6) in der der Auslaufkante (9) abgewandten Auslenkung (5) aufweist.

## Claims

1. Pneumatic vehicle tyre for passenger motor vehicles, in particular for use in wintry driving conditions, with a tread strip profile with at least one row of blocks which runs around in the circumferential direction, the profile blocks (1) of which are separated by way of transverse grooves, and the profile blocks (1) of which are provided in plan view with at least two wave-like or zigzag-shaped sipes (2) which are aligned with one another and substantially parallel to one another and which configure wave crests(4) with a deflection towards the top and wave troughs (5) with a deflection towards the bottom about an imaginary zero line, and the sipes (2) having, furthermore, two different widths (b₁, b₂) in plan view, a first width (b₁) of from 0.3 to 0.6 mm which is configured over a majority of the longitudinal extent of the sipe (2), and sections of a second, greater width (b₂) which are configured locally as snow pockets (6) around the points of the greatest deflection, **characterized in that** the snow pockets (6) are arranged distributed over the profile block (1) in such a way that one sipe (2) has snow pockets (6) exclusively in the wave crests (4), and the sipe or sipes (2) which adjoins/adjoin the said sipe (2) directly has/have the snow pockets (6) exclusively in the wave troughs (5), or vice versa.

2. Pneumatic vehicle tyre according to Claim 1, **characterized in that** the wave-like or zigzag-shaped sipes (2) have a trapezoidal deflection, the one basic side being arranged on the zero line and the other basic side (3) having the snow pocket (6), and the snow pocket (6) preferably being configured over the entire length (7) of the other basic side.

3. Pneumatic vehicle tyre according to Claim 1 or 2, **characterized in that**, in relation to their width (b₂) the snow pockets (6) are placed centrally onto the points of greatest deflection (4, 5).

4. Pneumatic vehicle tyre according to one or more of the preceding claims, **characterized in that** two or three sipes (2) are arranged in a profile block, and each sipe (2) has the snow pockets (6).

5. Pneumatic vehicle tyre according to one or more of the preceding claims, **characterized in that** at least one sipe (2) of the profile block (1) has the course of a straight line in the groove bottom, the wave-like or zigzag-shaped geometry of the sipe being approximately identical over a majority of its depth extent, but merging into a straight line in a depth region of from 1 mm to 4 mm, preferably of approximately 2 mm, measured from the groove bottom.

6. Pneumatic vehicle tyre according to one or more of the preceding claims, **characterized in that** the block row is a shoulder block row.

7. Pneumatic vehicle tyre according to one or more of the preceding claims, **characterized in that** the width (b₂) of the snow pockets is from 30% to 150% wider than the first width (b₁).

8. Pneumatic vehicle tyre according to one or more of the preceding claims, **characterized in that** the snow pockets (6) have a substantially constant width (b₂).

9. Pneumatic vehicle tyre according to one or more of the preceding claims, **characterized in that** the width (b₂) of the snow pockets (6) lies in a range of from 0.7 to 1.5 mm, and is preferably approximately 0.9 mm.

10. Pneumatic vehicle tyre according to one or more of the preceding claims, **characterized in that** the first width (b₁) is approximately 0.5 mm.

11. Pneumatic vehicle tyre according to one or more of the preceding claims, **characterized in that** the sipe (2) which is arranged closest to the run-out edge (9) of the profile block (1) has the snow pockets (6) in the deflection (5) which faces away from the run-out edge (9) .

## Revendications

1. Pneumatique de véhicule pour voitures de tourisme, en particulier pour l'utilisation dans des conditions de conduite hivernales, comprenant un profil de bande de roulement avec au moins une rangée de blocs périphérique s'étendant dans la direction périphérique, dont les blocs profilés (1) sont séparés les uns des autres par des rainures transversales et dont les blocs profilés (1), en vue de dessus, sont pourvus d'au moins deux fines entailles (2) de forme ondulée et/ou en forme de zigzag, essentiellement parallèles les unes aux autres et en affleurement les unes avec les autres, qui forment, autour d'une ligne d'origine imaginaire, par déviation vers le haut, des sommets d'ondulations (4), et par déviation vers le bas, des creux d'ondulations (5), et les fines entailles (2) présentant en outre, en vue de dessus, deux largeurs différentes (b₁, b₂), une première largeur (b1) de 0,3 à 0,6 mm, qui est réalisée sur une majeure partie de l'étendue longitudinale de la fine entaille (2) et des portions d'une deuxième largeur plus importante (b₂) qui sont réalisées sous forme de poches à neige (6) localement autour des endroits de plus grande déviation,
**caractérisé en ce que**
les poches à neige (6) sont réparties sur le bloc profilé (1) de telle sorte qu'une fine entaille (2) présente des poches à neige (6) exclusivement dans les sommets d'ondulations (4) et que la ou les fines entailles (2) directement adjacentes à cette fine entaille (2) présentent les poches à neige (6) exclusivement dans les creux d'ondulations (5) ou vice versa.

2. Pneumatique de véhicule selon la revendication 1,
**caractérisé en ce que** les fines entailles (2) de forme ondulée et/ou en forme de zigzag présentent une déviation trapézoïdale, l'un des côtés de base étant disposé sur la ligne d'origine et l'autre côté de base (3) présentant la poche à neige (6) et la poche à neige (6) étant réalisée de préférence sur toute la longueur (7) de l'autre côté de base.

3. Pneumatique de véhicule selon la revendication 1 ou 2, **caractérisé en ce que** les poches à neige (6), par rapport à leur largeur (b₂), sont placées centralement aux endroits de plus grande déviation (4, 5).

4. Pneumatique de véhicule selon l'une quelconque ou plusieurs des revendications précédentes,
**caractérisé en ce que** deux ou trois fines entailles (2) sont disposées dans un bloc profilé et chaque fine entaille (2) présente les poches à neige (6).

5. Pneumatique de véhicule selon l'une quelconque ou plusieurs des revendications précédentes,
**caractérisé en ce qu'**au moins une fine entaille (2) du bloc profilé (1) présente, dans le fond de rainure, l'allure d'une droite, la géométrie ondulée et/ou en forme de zigzag de la fine entaille étant approximativement identique sur une majeure partie de son étendue en profondeur, mais dans une région de profondeur de 1 mm à 4 mm, de préférence d'environ 2 mm, mesurée à partir du fond de rainure, se prolongeant dans une droite.

6. Pneumatique de véhicule selon l'une quelconque ou plusieurs des revendications précédentes,
**caractérisé en ce que** la rangée de blocs est une rangée de blocs d'épaulement.

7. Pneumatique de véhicule selon l'une quelconque ou plusieurs des revendications précédentes,
**caractérisé en ce que** la largeur (b₂) des poches à neige est plus large de 30 % à 150 % que la première largeur (b₁).

8. Pneumatique de véhicule selon l'une quelconque ou plusieurs des revendications précédentes,
**caractérisé en ce que** les poches à neige (6) présentent une largeur (b₂) essentiellement constante.

9. Pneumatique de véhicule selon l'une quelconque ou plusieurs des revendications précédentes,
**caractérisé en ce que** la largeur (b₂) des poches à neige (6) est située dans une plage de 0,7 à 1,5 mm, de préférence vaut environ 0,9 mm.

10. Pneumatique de véhicule selon l'une quelconque ou plusieurs des revendications précédentes,
**caractérisé en ce que** la première largeur (b₁) vaut environ 0,5 mm.

11. Pneumatique de véhicule selon l'une quelconque ou plusieurs des revendications précédentes,
**caractérisé en ce que** la fine entaille (2) qui est disposée le plus près de l'arête de sortie (9) du bloc profilé (1), présente les poches à neige (6) dans la déviation (5) opposée à l'arête de sortie (9) .
